# DEMANDE DE BREVET EUROPEEN

(11) **EP 1 394 518 A1**
(43) Date de publication de la demande: **03.03.2004**
(21) Numéro de dépôt: 03291858.3
(22) Date de dépôt: 28.07.2003
(51) Int. Cl.: G01F 23/20, G01F 23/00

(54) **Appareils et procédés de distribution de produits chimiques liquides**

(30) Priorité: 29.08.2002 FR 0210712
(71) Demandeur: Air Liquide Electronics Systems, 75007 Paris (FR)
(72) Inventeur: Rameau, Guillaume, 38000 Grenoble (FR); Mengolli, Pascal, 38130 Echirolles (FR)
(74) Mandataire: Vesin, Jacques

(57) **Abrégé**

Procédé pour mesurer la quantité de liquide dans un récipient comportant notamment des moyens d'écoulement dudit liquide depuis ledit récipient vers un point d'utilisation, dans lequel on mesure à un instant tᵢ le poids Pᵢ dans le récipient, cette mesure étant répétée à intervalles de temps prédéterminés. On mesure également la variation de poids ΔPᵢ = P₁ - Pᵢ₊₁ de liquide entre les instants tᵢ et tᵢ₊₁, ainsi i = 0,1 , ... n-1 de manière à engendrer un signal indiquant que le récipient peut être considéré comme vide lorsque ΔPᵢ est inférieur à un fraction prédéterminée du poids du récipient et/ou du liquide contenu initialement dans celui-ci.

## Description

La présente invention concerne les appareils et procédés de distribution de produits chimiques liquides. Elle se rapporte plus particulièrement à un procédé pour mesurer la quantité de liquide présent dans un récipient auquel sont reliés notamment des moyens d'écoulement dudit liquide depuis ledit récipient vers un point d'utilisation, procédé dans lequel on mesure à un instant tᵢ i variant de 0 à n le poids Pᵢ de liquide dans le récipient, cette mesure étant répétée à l'instant tᵢ₊₁ puis à l'instant tᵢ₊₂, jusqu'à l'instant tₙ (avec n nombre entier supérieur à 3).

Lors de la fabrication des semi-conducteurs durant laquelle on dépose sur une plaque support généralement en silicium (« wafer ») une succession de couches conductrices, semi-conductrices ou diélectriques (ayant éventuellement différentes constantes diélectriques), les dépôts étant réalisés sélectivement au travers de couches de masquage (partiel) de certaines surfaces, il est de plus en plus fréquent de réaliser ces couches en amenant des liquides chimiques dits « précurseurs » aux endroits voulus de la surface, lesdits liquides réagissant dans les conditions de température et de pression créées dans le réacteur dans lequel se trouve la ou les plaquettes support, avec d'autres produits également introduits dans le réacteur, tel que par exemple des gaz. C'est ainsi que par exemple, il est courant aujourd'hui de créer des couches diélectriques de Si C ou de Si OC en utilisant un précurseur tel que le tétramethylsilane (4MS), le diméthyl dimethoxysilane (DMDMOS) ou le TMCTS. Ces précurseurs sont des produits chimiques sous forme liquide dans les conditions normales de température et de pression.

De tels précurseurs possèdent une très forte valeur ajoutée et sont généralement livrés dans des réservoirs de faible volume (jusqu'à 20 litres typiquement). Ces réservoirs source alimentent traditionnellement un ou plusieurs réservoirs assurant la distribution aux équipements du client. Pour des raisons de coût, il est critique d'optimiser l'utilisation du précurseur contenu dans le réservoir source afin de limiter les pertes financières liées au retour chez le fournisseur d'un réservoir contenant encore du produit. Le choix de la technique mesurant la quantité restante dans le réservoir source revêt donc une importance capitale.

De nombreuses techniques sont aujourd'hui connues pour déterminer la présence de liquide dans un récipient, avec plus ou moins de précision. D'une manière générale, on peut citer les techniques suivantes :
- détection par mesure absolue du poids : cette méthode repose exclusivement sur la fiabilité de l'appareil de mesure de poids dont il est bien connu qu'elle n'est pas optimale ;
- détection par flotteur au sein d'un réservoir intérieur conique en sa partie inférieure couplée ou non à une mesure de poids : cette méthode met en contact l'appareil de mesure avec le précurseur, avec les risques de contamination et de corrosion associés ; de plus elle ne permet pas une utilisation optimale du produit ;
- détection par ultra-sons sur la ligne de distribution en sortie de réservoir couplée ou non à une mesure de poids : cette méthode permet d'utiliser la totalité du produit contenu dans le réservoir mais nécessite un réglage fin de l'instrumentation qui présente l'inconvénient de dépendre de la nature du produit ; par ailleurs, la mise en oeuvre de cette méthode représente un surcoût important ;
- détection par capteur capacitif ou optique : ces méthodes nécessitent des aménagements sur le fut contenant le produits, tels qu'une fenêtre de visée ou un tube latéral de visée..

Toutes ces méthodes bien connues ont cependant en général un point commun : elles ne permettent pas d'utiliser le produit chimique pratiquement jusqu'à sa dernière goutte. En effet, le coût des produits chimiques liquides utilisés jusqu'à ce jour ne justifiait pas nécessairement la présence de moyens sophistiqués pour économiser quelques grammes de produits et généralement l'utilisation d'une balance s'avérait suffisante avec toutes les imprécisions de poids liées par exemple au poids variable du récipient lui-même même lorsque le récipient est supposé être identique, ainsi que la précision toute relative des balances supportant des poids de plusieurs dizaines de kilos.

Le procédé selon l'invention permet de résoudre les inconvénients de l'art antérieur et propose une solution simple, peu coûteuse et fiable de détermination de la quantité restante de produit chimique liquide dans le réservoir.

Le procédé selon l'invention est caractérisé en ce que l'on mesure également la variation de poids ΔPᵢ = Pᵢ - Pᵢ₊₁ de liquide entre les instants tᵢ et tᵢ₊₁, de manière à engendrer à l'instant tₙ un signal S indiquant que le récipient peut être considéré comme vide lorsque ΔPᵢ est inférieur à un fraction prédéterminée du poids du récipient et/ou du liquide initialement contenu dans celui-ci (i variant de 0 à n, n sera défini de telle sorte que l'instant tₙ, auquel se produit le (n+1 )^{ème} échantillonnage de mesure de ΔPᵢ, est l'instant auquel on aura déterminé pour la première fois que ΔPᵢ est inférieur à ladite fraction prédéterminée du poids du récipient et/ou du liquide contenu dans celui-ci, fraction dont la valeur est fixée à l'avance).

De préférence, la mesure de variation de poids ΔPᵢ n'est déclenchée que lorsque la valeur de la mesure directe ou indirecte du poids du récipient et/ou du liquide est inférieure ou égale à une fraction prédéterminée F du poids initial du récipient et/ou du liquide contenu dans le récipient. En général, on préférera que la fraction prédéterminée F soit inférieure ou égale à 10 % environ du poids de liquide initialement contenu dans le récipient (ou du poids du récipient et du liquide initialement contenu dans le récipient).

Dans toute la description de la présente invention, on fait en général référence au poids Pᵢ de liquide dans le récipient, c'est-à-dire au poids de liquide restant dans le récipient à l'instant tᵢ. Le poids initial de liquide (avec ou sans le poids du récipient lui-même) est le poids de liquide lorsqu'on vient de changer le récipient (encore appelé « fût navette »). Selon l'instant t₀ auquel on commencera l'échantillonnage, le poids P₀ ne sera pas, en général, le poids initial de liquide (mais une valeur inférieure).

Il est bien entendu qu'en règle générale on mesurera le poids total du récipient c'est-à-dire le poids de l'enveloppe elle-même, plus le poids total du contenu, aux deux instants successifs tᵢ et tᵢ₊₁. Cette mesure est équivalente à la mesure de la variation du poids du liquide dans le récipient entre ces deux instants successifs, toutes choses égales par ailleurs. L'homme de métier effectuera les adaptations nécessaires à la mesure pour que quelle que soit la mesure réelle effectuée, la variation de cette mesure soit équivalente à la variation du poids de liquide dans le récipient.

Selon une variante de l'invention, l'intervalle de temps entre deux mesures successives (aux instants tᵢ et tᵢ₊₁) du poids du récipient et/ou du liquide est prédéterminé, de préférence environ 10 secondes.

De préférence, l'écoulement du liquide est provoqué au moins partiellement par la pression exercée par un gaz sous pression situé au-dessus de la surface du liquide dans le récipient, ledit gaz ayant une pureté compatible avec celle du liquide. Ce gaz sera essentiellement un gaz inerte par rapport au liquide à propulser. Par pureté compatible, on entend une pureté telle que celle-ci ne va pas augmenter la concentration en impuretés du liquide (particules ou espèces telles que H₂O, solvants, ...) En outre, ledit gaz dont la pression propulse le liquide hors du récipient doit avoir de préférence la plus faible solubilité possible dans le liquide chimique à propulser. L'homme de métier pourra en général déterminer rapidement dans la littérature ou par de simples essais, la solubilité des gaz cités ci-dessus dans le liquide à propulser. En général, c'est l'hélium (ayant une pureté dite « électronique » pour remplir ainsi le critère ci-dessus) qui conviendra le mieux.

Selon une variante de l'invention, le liquide est envoyé vers un deuxième récipient avant d'être envoyé vers son point d'utilisation.

En général, le gaz propulseur est un gaz choisi parmi l'azote, le gaz carbonique, l'argon, le krypton, le xénon et/ou l'hélium (de préférence, on choisira en général l'hélium) ; de préférence, le gaz a une pression comprise entre 10⁵ et 10⁶ Pascal. Bien qu'en général le gaz propulseur soit sous forme gazeuse et stocké sous pression dans un récipient tel qu'une bouteille, il est possible dans certains cas, d'envisager de délivrer le gaz initialement sous forme liquide, par exemple de l'azote et/ou de l'argon liquide qui du fait de leur vaporisation au-dessus du précurseur liquide, provoqueront la mise sous pression nécessaire.

L'invention concerne aussi un appareil de distribution d'un produit chimique liquide comportant un récipient contenant le liquide chimique à distribuer, des moyens pour relier ce récipient vers un point d'utilisation où doit être délivré le produit liquide, ainsi que des moyens de mesure de la quantité de liquide dans ledit récipient, caractérisé en ce qu'il comporte également des moyens d'horloge afin d'engendrer à des instants successifs tᵢ, tᵢ₊₁, etc... un signal permettant de déclencher une mesure Pᵢ, Pᵢ₊₁, etc... de la quantité dudit liquide chimique présente dans ledit récipient, auxdits instants tᵢ, tᵢ₊₁, etc..., des moyens de mémoire pour enregistrer les mesures Pᵢ, Pᵢ₊₁, etc... de la quantité dudit liquide respectivement aux instants tᵢ, tᵢ₊₁, etc..., des moyens pour calculer la différence de quantité de liquide ΔPᵢ = Pᵢ - Pᵢ₊₁ dans le récipient entre les instants tᵢ et tᵢ₊₁, des moyens pour comparer ΔPᵢ à une valeur F prédéterminée et des moyens pour engendrer un premier signal S₁ si ΔPᵢ > F ou un deuxième signal S₂ si ΔPᵢ ≤ F.

L'invention sera mieux comprise à l'aide des exemples de réalisation suivants, données à titre non limitatif, conjointement avec les figures qui représentent :
- la figure 1, une courbe sur laquelle sont montrées les variations relatives de poids du récipient en fonction du temps, lors de l'utilisation de liquide ;
- la figure 2, une vue partielle du dispositif mis en pratique pour alimenter un réacteur de fabrication de circuits intégrés, comportant un récipient mobile (« fût navette »), régulièrement changé lorsqu'il est vide et un récipient fixe qui est un récipient tampon avec l'installation ;
- la figure 3, un exemple d'un organigramme de fonctionnement de l'appareil et du procédé selon l'invention ;

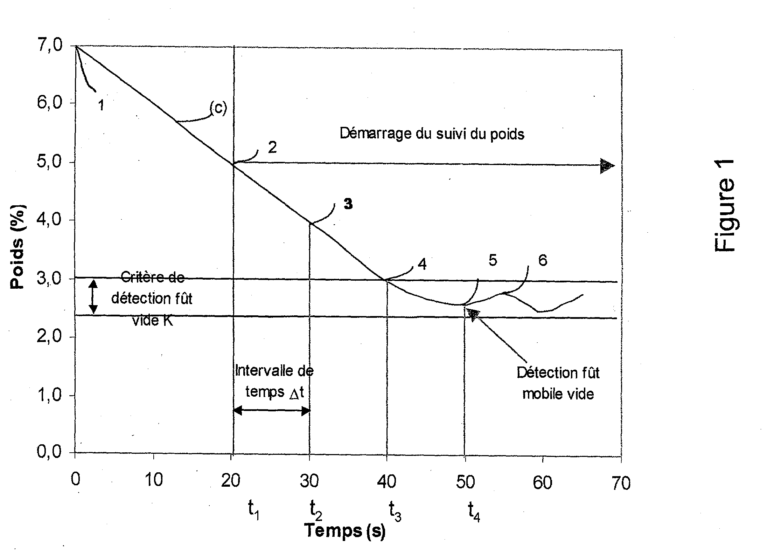

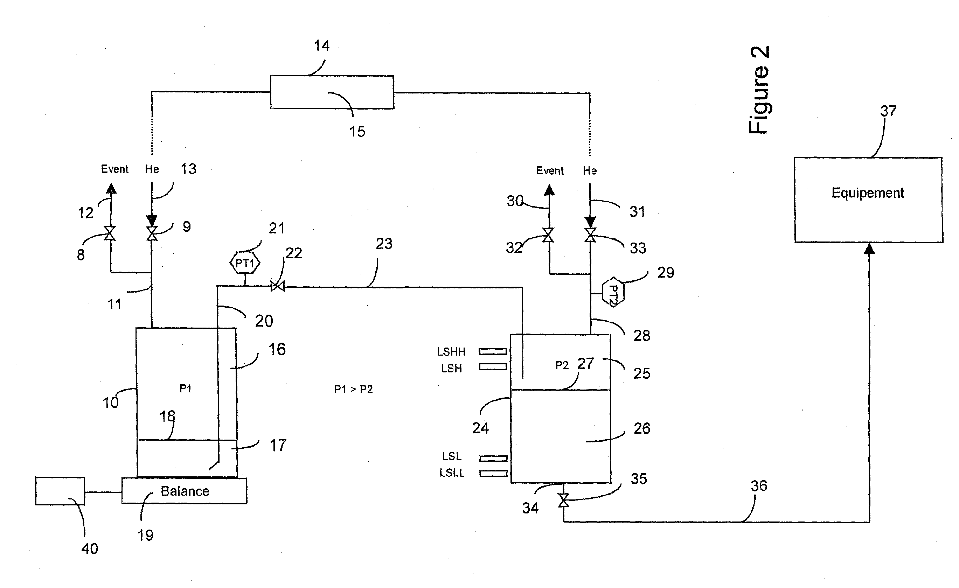

Sur la figure 1, on a représenté une courbe de variation relative du pourcentage du poids de liquide dans le récipient (sous pression de gaz comme indiqué ci-dessus) en fonction du temps, ce qui signifie qu'à l'instant t = 0 il reste 7 % du poids initial de liquide dans le récipient. Sur la gauche de la figure, on démarre à un instant t relatif égal à 0 avec une valeur de poids P₀ égale à 7 % du poids initial. La courbe C de vidage du fût mobile ou fût navette (voir figure 2) est une droite qui décroît régulièrement selon la représentation donnée sur la figure 1.

Le transfert depuis le récipient mobile 10 vers le récipient fixe 24 (ou le point d'utilisation si l'on n'utilise qu'un seul récipient) est assuré ici par le gaz de pureté électronique, peu soluble dans le liquide (par exemple l'hélium) qui est à une pression suffisante (habituellement, plusieurs bar pour pouvoir faire remonter (par pression) le liquide chimique dans le tube plongeur 20 qui s'étend jusqu'au fond du récipient et qui est souvent de longueur supérieure à la longueur nécessaire pour atteindre le fond du récipient, ce qui permet de couder ce tube qui repose sur le fond du récipient. De préférence, la section d'extrémité du tube est en biseau, la partie la plus longue du biseau portant sur le fond du récipient, de manière à mieux récupérer les toutes dernières quantités de liquide lorsque le fût se vide).

Du fait de la surpression constante au-dessus du liquide chimique, très supérieure à la pression due à la hauteur du liquide dans le récipient, on a donc une pression quasi constante au niveau de l'extrémité du tube plongeur, ce qui se traduit par une courbe (sur la figure 1) ayant une pente constante jusqu'au point 4. Ce point 4 est représentatif de l'instant t₃ (sur la figure 1) auquel l'extrémité du tube plongeur n'est plus entièrement (complètement) submergée dans le liquide ce qui se traduit par une aspiration de gaz propulseur dans le tube et donc une quantité moindre de liquide chimique transféré. Ainsi la courbe C tend à décroître moins vite et à l'instant t₄ d'échantillonnage suivant, n'a pas atteint le point qu'elle aurait dû atteindre si la courbe C avait continué sa décroissance linéaire. Selon l'invention, le récipient doit être considéré comme vide à partir de cet instant. Selon l'art antérieur, on ne pouvait en général pas déterminer ce niveau avec précision.

(Les procédés de l'art antérieur, afin de ne pas risquer d'assécher la canalisation du tube plongeur consistent en général à fixer le niveau de 5 % de produit restant (limite fixe) comme étant la limite à laquelle il faudra changer le récipient contenant le liquide chimique, ce qui conduit à jeter un pourcentage non négligeable (de 2 à 4 %) du produit chimique liquide alors que l'on peut selon l'invention utiliser une partie du produit chimique restant tout en n'ayant aucun risque d'assécher l'utilisateur au point d'utilisation).

En partant du point 1 à l'instant t = 0, on arrive après un instant t, au point 2 de la courbe auquel on décide arbitrairement de démarrer le processus de monitorage du contenu du fût mobile. Ce processus pourrait être démarré dès l'instant t = 0 selon un mode préférentiel de réalisation de l'invention mais on peut aussi dans certains cas souhaiter le démarrer lorsque Pᵢ atteint simplement une certaine valeur fixée préalablement. On procède ensuite de façon régulière à la mesure de la valeur ΔPᵢ à l'aide de la balance, comme cela sera expliqué ci-après, de façon soit régulière (de préférence) soit de façon aléatoire ou commandée par l'intervention d'un autre paramètre, par un échantillonnage à tous les intervalles de temps Δt. On arrive ainsi au point 3 de la courbe C à l'instant t₂ = t₁ + Δt puis au point 4 de la courbe à l'instant t₃ = t₂ + Δt, au point 5 de la courbe où la mesure met en évidence que la valeur ΔP est inférieure à la valeur que l'on aurait dû atteindre en suivant la pente de décroissance régulière précédente de la courbe C. Ceci indique (lorsque ΔP est inférieur à une valeur que l'on aura prédéterminée) que le fût est vide ou sensiblement vide et qu'il est donc temps de le changer L'expérience montre que le point d'inflexion 5 dépend du récipient, du tube plongeur, etc... et qu'il n'est pas possible de descendre en dessous d'un certain pourcentage de poids qui peut varier selon les cas en fonction de paramètres physiques de chaque récipient, de chaque tube plongeur, etc..., mais qui est toujours imprévisible lorsqu'on installe le fût de liquide chimique.

Sur la figure 2, on a représenté un exemple de réalisation du procédé selon l'invention et d'un système de mise en oeuvre sur lequel les mêmes éléments que ceux des autres figures portent les mêmes références. Un fût mobile 10 est relié par une canalisation 11 via une vanne 9 puis une canalisation 13 à des moyens réservoirs de gaz sous-pression, de préférence un gaz inerte, et plus particulièrement de l'hélium lorsque l'azote par exemple et/ou l'argon réagissent avec le produit chimique liquide (l'hélium a l'avantage d'être totalement inerte avec pratiquement tous les produits). Ce gaz hélium 15 est contenu dans une capacité 14 elle-même reliée par la canalisation 31, la vanne 33 et la canalisation 28 au fût fixe 24. Sous le fût mobile 10 se trouve une balance avec des moyens de mesures de poids 40, tandis que dans le fût mobile on retrouve au fond de celui-ci le produit chimique liquide dans lequel vient plonger la canne 20 pour prélever le produit et l'envoyer vers le fût fixe 24 au-dessus de la surface 18 duquel se trouve le gaz inerte 16 sous pression P₁ qui pressurise ainsi le produit chimique liquide de manière à permettre son transfert vers le fût fixe 24. Sur la canalisation 11 est également connectée une canalisation 12 par l'intermédiaire d'une vanne 8 servant d'évent permettant ainsi de contrôler la pression du gaz inerte 16. Un capteur de pression 21 permet de mesurer la pression P₁ dans le récipient 10, sur la canalisation 20 issue du récipient mobile 10, à travers la vanne 22 puis la canalisation 23 qui permet de recharger le fût fixe 24 en produit chimique liquide lorsque celui-ci a atteint son niveau bas LSL ou son niveau très bas LSLL. Le remplissage du fût fixe 24 permet de faire monter le niveau de produit chimique liquide 26 de son niveau bas LSL ou très bas LSLL vers son niveau haut LSH ou son niveau très haut LSHH tout en maintenant le gaz inerte tel que l'hélium dans la partie supérieure 25 du réservoir fixe 24. Connecté sur la canalisation 28 se trouve un capteur de pression 29 permettant de mesurer la pression P₂ à l'intérieur du fût fixe 24 ainsi qu'une canalisation dérivée 30 et une vanne 32 jouant le rôle d'évent de manière à contrôler la pression P₂ à l'intérieure du fût fixe 24.

A la base du fût fixe 24 se trouve une canalisation 34 suivie d'une vanne 35 et d'une canalisation 36 le tout permettant de délivrer le produit chimique liquide vers l'équipement 37. En fonctionnement, on conservera toujours de préférence la pression P₁ dans le fût mobile supérieure à la pression P₂ dans le fût fixe (redondance sécurité détection niveaux haut et bas). Ci-après va être décrit le fonctionnement du système illustré sur la figure 2, en marche normale. Dans ce cas, la distribution s'effectue par pressurisation du fût fixe 24 ; lorsque le niveau bas LSL est atteint le remplissage du fût fixe est déclenché. Le produit est transféré depuis le fût mobile 10 sans pour autant interrompre la distribution aux équipements via la canalisation 34, la vanne 35 et la ligne 36. Le remplissage du fût fixe 24 s'arrête automatiquement dès que le niveau LSH est atteint. Il est à noter que les niveaux LSLL et LSHH ne sont pas utilisés en tant que niveaux de détection pour un fonctionnement normal mais uniquement comme des niveaux d'alarme nécessitant une procédure particulière d'arrêt d'urgence ou de remplissage d'urgence.

Si le fût mobile 10 ne contient plus assez de produit pour remplir le fût fixe lorsqu'un remplissage est en cours, le système de détection de fin du fût mobile 10 tel qu'expliqué en regard de la figure 1 permet de déclencher l'opération de changement de fût mobile. Pour détecter cette fin de fût mobile deux paramètres modifiables par l'opérateur peuvent être utilisés à cet effet : l'intervalle de temps Δt entre les instants par exemple t₁ et t₂ ou t₂ et t₃, etc... (voir figure 1) ainsi que la variation de poids ΔPᵢ entre deux instants déterminés, cette variation de poids pouvant être soit une variation absolue ΔPᵢ soit une variation relative ΔPᵢ/P (exprimé comme ci-dessus en pourcentage du poids initial), l'opérateur ayant préalablement enregistré dans le système de mesure et de commande 40 de la balance la valeur de seuil minimum que le paramètre ΔPᵢ ou le paramètre ΔPᵢ/P ne devrait pas atteindre, la détection du passage en-dessous de ce niveau permettant d'engendrer un signal d'alarme tel qu'un affichage, une sirène, etc...

Selon une variante de l'invention, il est possible de prévoir un système de pré-alarme de seuil paramétrable (par exemple 5 %) concernant le paramètre ΔPᵢ/P. Lorsque cette variation devient inférieure à 5 %, l'attention de l'opérateur est attirée là encore par une pré-alarme ou une pré-sirène, etc... De préférence, la quantité de produit contenu dans le fût mobile est affichée sur un écran du système 40 à tout moment. Elle peut être exprimée en unité de poids et/ou en unité de volume et/ou en pourcentage. La méthode de détection de fût vide peut utiliser indifféremment tout unité dérivée du poids dont celle mentionnée ci-dessus. En pratique, il est préférable d'utiliser la mesure exprimée en pour cent : dans ce cas de figure l'intervalle de temps Δt est typiquement de 10 à 30 secondes et le critère de variation de poids est typiquement de 0,5 % (valeur absolue). La méthode de détection du fût vide permet également de surveiller la variation relative du poids au cours de l'intervalle Δt. Bien entendu, dans ce cas, le critère de variation de poids ΔP doit être adapté. D'une manière générale, dans la mesure où l'on surveille une variation absolue ou relative de poids de liquide, le poids du fût mobile 10 n'intervient pas directement dans la mesure et doit être simplement soustrait. On supposera en règle générale que le poids du fût vide est toujours le même notamment lorsqu'on utilisera la variable en valeur absolue.

Bien entendu, le système décrit sur la figure 2 peut être applicable dans le cas où l'on a plusieurs fûts fixes et un système de plusieurs fûts mobiles, chaque fût mobile devant être équipé d'un système de mesure de poids tel que décrit sur la figure 2. Ainsi le système décrit sur cette figure 2 permet de s'affranchir des problèmes de dérive de la balance et de l'effort exercé par la tuyauterie de raccordement du système de distribution sur le fût mobile qui peut venir grandement perturber une mesure qui doit être précise lorsque le fût se vide.

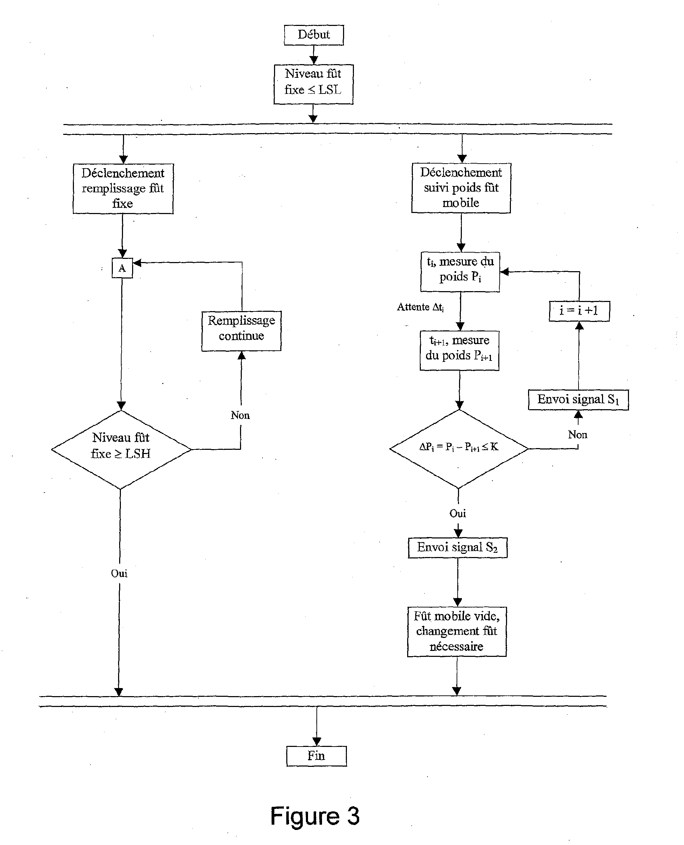

La figure 3 décrit un exemple d'un organigramme de fonctionnement de l'appareil et du procédé selon l'invention qui est explicite par lui-même.

Bien entendu, d'autres systèmes de fonctionnement sont possibles et celui-ci n'est donné qu'à titre indicatif.

A l'instant t = t₀ correspondant à la détection de niveau bas LSL dans le fût fixe, démarrent simultanément le remplissage du fût fixe et le suivi du poids de liquide dans le fût mobile tel que décrit par la présente invention. Tant que le niveau haut de liquide LSH dans le fût fixe n'a pas été détecté, le remplissage continue (boucle passant par le point A sur la figure 3) ainsi que le suivi du poids dans le fût mobile. On se place après plusieurs boucles (comme expliqué ci-après) à l'instant t = tᵢ. La première opération est la mémorisation du poids Pᵢ restant dans le fût mobile. Cette opération est répétée à l'instant tᵢ₊₁ = tᵢ + Δt où le poids Pᵢ₊₁ restant est également mémorisé. La variation de poids ΔPᵢ = Pᵢ - Pᵢ₊₁ pendant l'intervalle de temps Δtᵢ est calculée et comparée à une valeur prédéterminée K. Un signal S₁ est engendré si ΔPᵢ > K pendant l'intervalle de temps Δtᵢ (fût mobile disponible) auquel cas le suivi de poids se poursuit selon la boucle représentée sur la figure 3 (itération i = i+1). Un signal S₂ est engendré si ΔPᵢ ≤ K pendant ce même intervalle de temps Δtᵢ (fût mobile vide).

On compare alors tᵢ à tₘ (tₘ étant un instant pré-programmé de fin d'opérations). Si tᵢ < tₘ, on remplace tᵢ par tᵢ₊₁ dans la boucle et on recommence. Sinon, on termine l'opération. Il va de soi que les valeurs de Δtᵢ et de K sont prédéterminées, c'est-à-dire choisies par avance par l'utilisateur.

### EXEMPLE:

L'exemple suivant illustre le procédé de l'invention à partir des données suivantes :
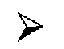 Fût mobile contenant environ 20 litres de produit lorsqu'il est plein.
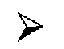 Détection niveau bas LSL dans fût fixe alors qu'il reste 22.5% de produit dans le fût mobile.
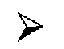 Gradient de pression entre les deux fûts: 0.5 bar.
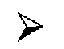 Intervalles de temps Δtᵢ = 15 secondes.
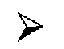 Critère de détection de fût vide: variation de poids < 0.5% pendant Δtᵢ
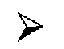 Les valeurs du poids de liquide restant dans le fût mobile sont données dans le tableau suivant:

| Temps (secondes) | Poids (%) |
|---|---|
| 0 | 22.5 |
| 15 | 21.0 |
| 30 | 19.6 |
| 45 | 18.1 |
| 60 | 16.4 |
| 75 | 15.0 |
| 90 | 13.5 |
| 105 | 12.1 |
| 120 | 10.4 |
| 135 | 8.5 |
| 150 | 7.3 |
| 165 | 5.8 |
| 180 | 4.1 |
| 195 | 2.7 |
| 210 | 1.2 |
| ***225*** | ***1.0**** |

| | |
|---|---|
| *Détection de fût vide à t = 225 secondes. | |

Remarque: la balance indique encore la présence de 1.0% de produit restant dans le fût mobile lorsque celui-ci est déclaré vide. Ceci montre l'effet cumulé de la précision relative de la balance et de l'effort causé par la tuyauterie de raccordement sur le fût mobile, effort qui tend à augmenter le poids apparents du fût mobile : mais l'exemple ci-dessus montre bien que ces deux effets ne contrarient en rien la fiabilité de la détection de fût vide, selon le procédé de l'invention.

## Revendications

1. Procédé pour mesurer la quantité de liquide présent dans un récipient auquel sont reliés notamment des moyens d'écoulement dudit liquide depuis ledit récipient vers un point d'utilisation, procédé dans lequel on mesure à un instant tᵢ, i variant de 0 à n, le poids Pᵢ de liquide dans le récipient, cette mesure étant répétée à l'instant tᵢ₊₁, puis à l'instant tᵢ₊₂, jusqu'à l'instant tₙ, n étant un nombre entier supérieur à 3, **caractérisé en ce que** l'on mesure également la variation de poids du liquide ΔPᵢ = Pᵢ - Pᵢ₊₁ entre les instants tᵢ et tᵢ₊₁, avec Δt = tᵢ₊₁- tᵢ de manière à engendrer à l'instant tₙ un signal S indiquant que le récipient peut être considéré comme vide lorsque ΔPᵢ est inférieur à une fraction prédéterminée F du poids du récipient et/ou du liquide contenu initialement dans celui-ci.

2. Procédé selon la revendication 1, **caractérisé en ce que** la mesure de variation de poids ΔPᵢ n'est déclenchée que lorsque la valeur de la mesure directe ou indirecte du poids du récipient et/ou du liquide est inférieure ou égale à une fraction prédéterminée F du poids initial du récipient et/ou du liquide contenu dans le récipient.

3. Procédé selon la revendication 2, **caractérisé en ce que** la fraction prédéterminée F est inférieure ou égale à 10 % du poids initial du récipient et/ou du liquide contenu initialement dans celui-ci.

4. Procédé selon l'une des revendications 1 à 3, **caractérisé en ce que** l'intervalle de temps Δtᵢ = tᵢ₊₁ - tᵢ entre deux mesures successives du poids du récipient et/ou du liquide est prédéterminé, de préférence environ dix secondes.

5. Procédé selon l'une des revendications 1 à 4, **caractérisé en ce que** l'écoulement du liquide est provoqué au moins partiellement par la pression exercée par un gaz sous-pression situé au-dessus de la surface du liquide dans le récipient, ledit gaz ayant une pureté compatible avec celle du liquide.

6. Procédé selon la revendication 5, **caractérisé en ce que** le gaz est un gaz essentiellement inerte par rapport au liquide à propulser.

7. Procédé selon l'une des revendications 5 ou 6, **caractérisé en ce que** le liquide est envoyé vers un deuxième récipient avant d'être envoyé vers son point d'utilisation.

8. Procédé selon l'une des revendications 5 à 7, **caractérisé en ce que** le gaz est un gaz choisi parmi l'hélium, le néon, le xénon, l'azote, l'argon, le krypton et/ou le gaz carbonique.

9. Procédé selon l'une des revendications 5 à 8, **caractérisé en ce que** le gaz a une pression comprise entre 10⁵ et 10⁶ Pascal.

10. Appareil de distribution d'un produit chimique liquide comportant un récipient contenant le liquide chimique à distribuer, des moyens pour relier ce récipient vers un point d'utilisation où doit être délivré le produit liquide, ainsi que des moyens de mesure de la quantité de liquide dans ledit récipient, **caractérisé en ce qu'**il comporte également des moyens d'horloge afin d'engendrer à des instants successifs tᵢ, tᵢ₊₁, etc... un signal permettant de déclencher une mesure Pᵢ, Pᵢ₊₁, etc... de la quantité dudit liquide chimique , auxdits instants tᵢ, tᵢ₊₁, etc..., des moyens de mémoire pour enregistrer les mesures Pᵢ, Pᵢ₊₁, etc... de la quantité dudit liquide respectivement aux instants tᵢ, tᵢ₊₁, etc..., des moyens pour calculer la différence de quantité de liquide ΔPᵢ = Pᵢ - Pᵢ₊₁ dans le récipient entre les instants tᵢ et tᵢ₊₁, des moyens pour comparer ΔPᵢ à une valeur F prédéterminée et des moyens pour engendrer un premier signal S₁ si ΔPᵢ > F ou un deuxième signal S₂ si ΔPᵢ ≤ F .
